# EUROPEAN PATENT APPLICATION

(11) **EP 3 686 633 A1**
(43) Date of publication of application: **29.07.2020**
(21) Application number: 19153006.2
(22) Date of filing: 22.01.2019
(51) Int. Cl.: G02B 1/18, B60J 1/20, G02B 27/00, B60R 1/00, B01J 21/06

(54) **OPTICAL IMAGING DEVICE, VISION SYSTEM AND WINDOW FOR A MOTOR VEHICLE, AND METHOD FOR MANUFACTURING**

(71) Applicant: Veoneer Sweden AB, 447 83 Vårgårda (SE)
(72) Inventor: WIGREN, Roger, 583 30 Linköping (SE); MACKEN, Stephen, 583 30 Linköping (SE)
(74) Representative: Müller Verweyen

(57) **Abstract**

An optical imaging device (12) for a motor vehicle (10) comprises at least one transparent optical element (34). A surface of said optical element (34) is at least partially provided with a self-cleaning and/or dirt repellent film (36).

## Description

The invention relates to an optical imaging device, a vision system and a window for a motor vehicle. The invention also relates to a corresponding method of manufacturing of such optical imaging device, vision system and window.

In the interior material of cars there are numerous volatile compounds that evaporate during the lifetime of the vehicle and to some extent condense on other surfaces within the car. The most common indication of this evaporation is a visible dirt film that can be seen for example on the inside of the windshield. This film can cause a reduction of the visibility through the windshield. The contamination consists mainly of organic molecules, e.g. plasticizers used in plastic interior parts such as the dashboard of the motor vehicle. The dirt film can be very sticky and oily and is difficult to remove.

In motor vehicle equipped with an imaging apparatus for a vision system, in particular a camera, the above mentioned dirt film can reduce the image quality of the camera considerably, and therefore reduce the performance of the vision system. The image quality can be deteriorated both in reduced sensitivity, contrast and sharpness but also cause stray light phenomena either via contamination of the windshield or the lens of the vision system optics.

The vision system camera is often placed close to the windshield thus making a cleaning procedure of the lens difficult and risk the installation calibration of the system. Furthermore, cleaning of the vision system camera lens is never a recommended procedure due to the risk of damaging the lens or contamination it further.

Dirt-repellant or self-cleaning glass is known as prior art, when it comes to window glasses of buildings or windshields of jet planes. The glasses are coated on the outer surface, to make the surface smoother and to avoid dirt from sticking on the glass. Those surfaces are self-cleaning, as they are water repellent and dirt or dust is washed off the surface by the rain.

The object of the invention is to ensure high quality operation of the optical imaging device and the vision system over the lifetime of the motor vehicle, and to avoid disturbances caused by the evaporation of plastic emissions in the motor vehicle.

The invention solves this object with the features of the independent claims. The optical imaging device comprises at least one transparent optical element. According to the invention, a surface of the optical element is at least partially provided with a self-cleaning and/or dirt repellent film. The self-cleaning and/or dirt repellent film on the lens can prevent the lens from building up a dirt film which causes a reduction of the visibility through the lens. Therefore, the function of the optical imaging device is not disturbed by organic molecules evaporating from the interior of the motor vehicle. This leads to higher image quality of the optical imaging device, and thus to better system performance of the vision system.

Preferably, the self-cleaning and/or dirt repellent film comprises a photocatalyst, i.e. photocatalytic particles like titanium dioxide, thus forming a photocatalytic film. In particular, the photocatalytic film contains crystalline titanium dioxide, preferably anatase. More generally, the self-cleaning and/or dirt repellent film comprises a material that upon exposure to light, in particular blue or UV light, accelerates the oxidation in air of organic compounds absorbed or deposited on the film. The photocatalyst induces a decomposition of organic molecules contacting the photocatalytic film into molecules prone to evaporation from the optical element through chemical reaction, in particular oxidation, under the influence of light, in particular blue light and/or UV light, for example the blue and/or UV component of sunlight. The resulting molecules simply evaporate from the coated optical element, preventing the forming of organic contamination on the coated optical element. The transparent, i.e. optically clear, self-cleaning film can be described as a photo-oxidatively cleaning film. The photocatalytic film is adherent to a transparent glass or plastic substrate of the optical element. The photocatalytic film can be a coating or a separate film applied to the substrate for example through an adhesive.

Preferred photocatalysts are crystalline oxides, particularly crystalline oxides comprising titanium, tin, tungsten and/or molybdenum. Other photocatalysts include titanium dioxide with co-catalysts such as platinum, palladium, gold, silver, copper, wolfram, molybdenum or their sulfides or oxides; or compound oxides such as SrTiO3 or CaTiO3. The photocatalytic film may comprise up to 90 weight-% non-crystalline silicon dioxide in addition to the photocatalyst.

Preferably, a transparent intermediate barrier layer is provided between said optical element and said self-cleaning and/or dirt repellent film, which is adapted to impede migration of components of said optical element into said self-cleaning and/or dirt repellent film. In the case of an alkali containing glass, like a sodium containing glass, for the optical element, the barrier layer preferably is an alkali migration blocking layer, i.e. an alkali metal ion or alkali metal oxide migration blocking layer. In this manner, the function of the photocatalyst is not disturbed or reduced by components diffusing from the optical element into the photocatalyst containing film.

Preferably, the self-cleaning and/or dirt repellent film is provided on an outer surface of a foremost optical element. The foremost optical element is the optical element through which the optical radiation enters into the imaging device first, and/or the optical element which has the largest distance to an image sensor in the imaging device. The outer surface of a foremost optical element is most exposed to organic compounds. However, a self-cleaning and/or dirt repellent film can also be applied to inner surfaces and/or inner optical elements within a lens objective of the imaging device.

The invention also relates to a vision system for a motor vehicle comprising at least one optical imaging device as described above, and a processing device adapted to perform image processing of images captured by said optical imaging device.

In a preferred embodiment of the invention, the optical imaging device, when mounted to a motor vehicle, is adapted to capture images from the surrounding of the motor vehicle. In this case, the optical imaging device, when mounted to a motor vehicle, is directed to view through a windshield or a window of the motor vehicle. In this case, preferably not only the optical element of the imaging device, but also an inner surface of the vehicle windshield or window facing the imaging device is at least partially provided with a self-cleaning and/or dirt repellent film. In this case, the self-cleaning and/or dirt repellent film on the vehicle windshield or window preferably has the same properties, and/or is made in the same manner, as the self-cleaning and/or dirt repellent film on the optical element of the imaging device.

In another embodiment, the optical imaging device, when mounted to a motor vehicle, is adapted to capture images of the driver, in particular the driver's face., for example as part of a driver drowsiness detection system.

Another preferred application of the invention relates to a window, like the rear window in case of a rear view camera, the windscreen for limiting a compartment, in particular the passenger compartment, of a motor vehicle. According to the invention, the inner surface of the window or windscreen facing the passenger compartment, when mounted to the motor vehicle, is at least partially provided with a self-cleaning of dirt repellent film. In this case, the self-cleaning and/or dirt repellent film on the vehicle windshield or window preferably has the same properties, and/or is made in the same manner, as the self-cleaning and/or dirt repellent film on the optical element of the imaging device. The invention is also applicable to windows limiting other compartments than the passenger compartment, for example a window of vehicle lights, in particular the front lights, when an imaging apparatus is for example arranged in a headlight compartment.

The invention also relates to a method of manufacturing an optical imaging device, a window or a windscreen as described above. According to the invention, the method comprises coating a surface of said optical element, window or windscreen at least partially with a photocatalytic layer from a vapor phase or from a photocatalytic precursor dissolved or dispersed in a liquid, in particular a long lived sol. An intermediate barrier layer as described above may preferably be formed as the product of a chemical reaction between hydrogen glass and the photocatalytic precursor.

In the following the invention shall be illustrated on the basis of preferred embodiments with reference to the accompanying drawings, wherein:
- Fig. 1: shows a schematic drawing of a vision system for a motor vehicle;
- Fig. 2: shows a motor vehicle with an imaging device arranged behind a vehicle windscreen;
- Fig. 3: shows a part of a motor vehicle with an imaging device arranged to monitor the driver's face; and
- Fig. 4: shows a lens objective of a camera forming an imaging device.

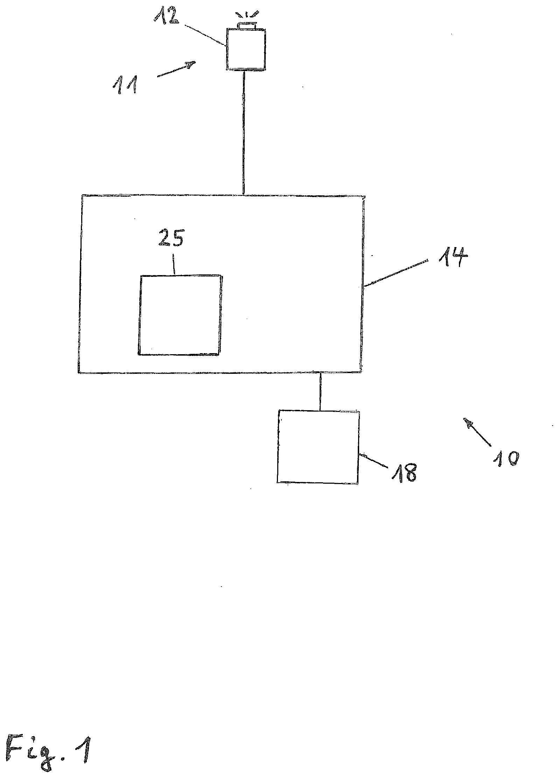

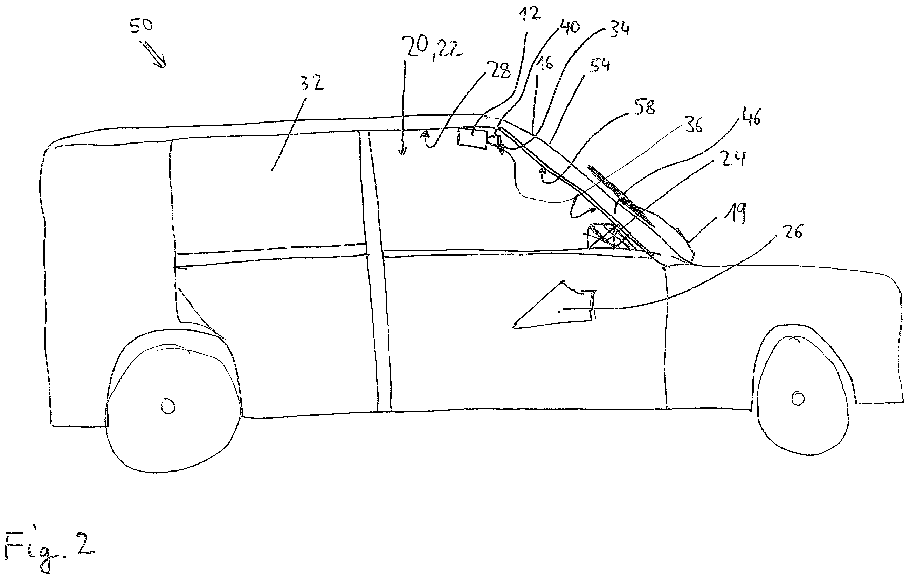

The vision system 10 is to be mounted in or to a motor vehicle 50 and comprises an imaging apparatus 11 for capturing images of a region surrounding the motor vehicle, for example a region in front of the motor vehicle. The imaging apparatus 11 may be mounted for example behind the vehicle windscreen or windshield 54 (see Figure 2), in a vehicle headlight or headlight compartment, or in the radiator grille. The imaging apparatus 11 comprises one or more optical imaging devices 12, in particular cameras, preferably operating in the visible wavelength range, in the infrared wavelength range, or in both visible and infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments, like the one shown in Figure 1, only one imaging device 12 forming a mono imaging apparatus 11 can be used.

The imaging apparatus 11 is coupled to an on-board data processing device 14 adapted to process the image data received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11, receiving the electrical signal containing the image information from a stereo imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM, GPU and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle is an autonomous vehicle adapted to drive partially or fully autonomously or automatically, and driving actions of the driver are partially and/or completely replaced or executed by the ego vehicle.

Fig. 2 shows a motor vehicle 50 with a compartment 20, here the passenger compartment 22. Arranged in the passenger compartment 22 is dashboard 24, door panels 26, a roof sky 28, seats 29 and other components which comprise plastics or are built from plastics. The passenger compartment 22 is limited by one or more optically transparent windows 32, 54 that separate the passenger compartment 22 from the outside surrounding of the motor vehicle 50.

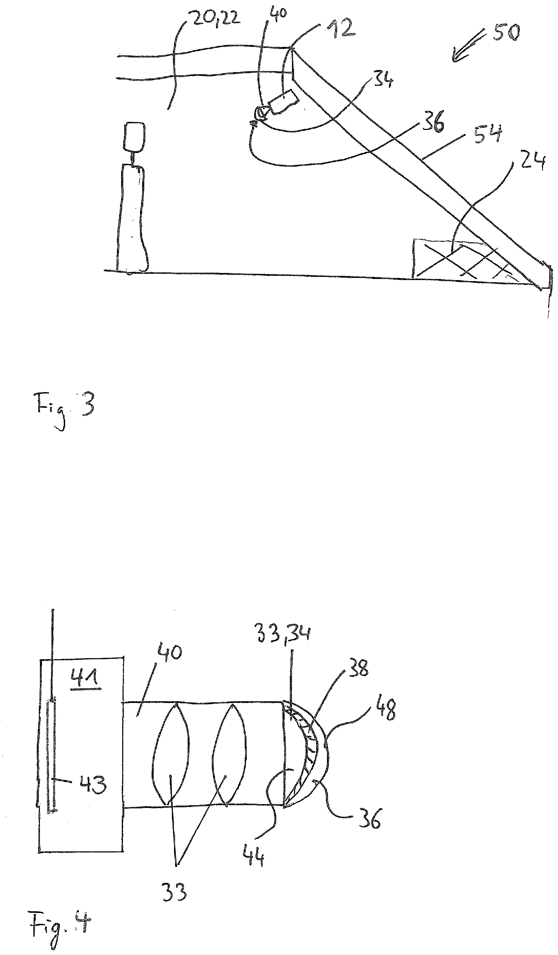

A camera 12 of the vision system 10 is arranged in the passenger compartment 22 and is directed to a window, here to the windshield 54 of the motor vehicle 50, in order to view through the window 32, 54 to the surrounding of the motor vehicle 50. The camera 12 comprises a lens objective 40 with one or more optical elements, here optical lenses 33, and a camera body 41 containing an image sensor 43 for converting optical radiation focused by the lens objective 40 onto the image sensor 43 into electrical signals comprising the image information, see Figure 4.

In a first embodiment of the invention, at least one of the optical elements 33, 34 of the imaging device 12 is coated with a self-cleaning and/or dirt repellent film 36, which will be explained in more detail below. Preferably, at least the outer surface of the foremost optical element 34 of the camera 12, here one of the lenses 33, is coated with a self-cleaning and/or dirt repellent film 36. The foremost optical element 34 is the optical element through which the optical radiation enters into the camera 12 first, and/or the optical element which has the largest distance to the image sensor 43. The foremost optical element 34 is not restricted to a lens 33 as in Figure 4, but can for example be a protecting window not having any diffracting properties.

The vehicle windshield 54 has a first surface (outer surface) 16 which is directed to the outside surrounding of the motor vehicle 50. A pair of windshield wipers 19 has contact with the first surface 16 of the windshield 54. In a second embodiment of the invention, the windshield 54 is coated with a self-cleaning and/or dirt repellent film 36 on its second surface (inner surface) 18 opposite the outer surface 16, facing towards the passenger compartment 22 of the motor vehicle 50. In case the imaging device 12 is arranged to view through a different window 32, for example the rear window of the vehicle, the self-cleaning and/or dirt repellent film 36 is provided on the inner surface of this window 32.

In a third preferred embodiment, a self-cleaning and/or dirt repellent film 36 is provided both on the outer surface of the foremost optical element 34 of the imaging device 12 and on the inner surface 58 of the vehicle windscreen 54.

When the motor vehicle 50 is exposed to high temperatures, volatile compounds from the interior material of the motor vehicle 50, such as the dashboard 24, will evaporate and condense on other surfaces within the motor vehicle 50. The most common indication of this is a dirt film which can be seen on the second surface 58 of the windshield 54 and causes a reduction of the visibility through the windshield 54. This contamination consists mainly of organic molecules, e.g. plasticizers and softeners used in plastic interior details. This film is often very sticky an oily and is difficult to remove completely.

The coating 36 on the windshield 54 and/or the optical element 34 of the camera 12 prevents the volatile evaporation components from sticking on the optical element 34 or the inner surface of the windshield 54 the camera 12 is directed to, so that the vision system 10 can view into the vehicle surrounding without adverse effects or malfunction. The camera 12 is set up to recognize an object 42 outside the motor vehicle 50, in particular in front of the motor vehicle 50 in the direction of travel, in order to warn the driver, to initiate a driving maneuver, to brake the vehicle and/or take other suitable action as described before.

In a motor vehicle 50 equipped with a vision system 10 which comprises a camera 12, the above described dirt film can considerably reduce the image quality obtained by the vision system 10 and thus reduce the system performance. The image quality can be deteriorated both in reduced sensitivity, contrast or sharpness but also cause stray light phenomena either via contamination of the windshield 54 or the optical element 34 of the camera 12 of the vision system 10. The camera 12 is often placed closed to the windshield 54 thus making a cleaning procedure difficult and risking the installation calibration of the vision system 10. Cleaning of the optical element 34 is never a recommended procedure due to risk of damaging the surface or contaminating it even further.

A camera 12 of the vision system 10 can also be directed to a side window for a blind spot assistance system, or to the rear window for a rear view camera of a park assistance system, for example. In this case, the inventive coating 16 applies to the corresponding window 32 through which the camera 12 views.

Fig. 3 shows another embodiment of a motor vehicle 50 with a passenger compartment 22 and a vision system 10. In this embodiment, the imaging device or camera 12 of the vision system 10 is directed to the interior 20 of the motor vehicle 50 to monitor the face of the driver, for driver drowsiness detection. At least the outer surface of the foremost optical element 34 of the camera 12 is coated with a self-cleaning and/or dirt repellent film 36 to avoid adverse effects or malfunction caused volatile compounds or softener, originating from the plastic interior 24, 26, 28 of the motor vehicle 50, condensing on the outer surface of the foremost optical element 34 of the camera 12.

Fig. 4 shows details of a camera 12 of the vision system 10 with camera body 41 and lens objective 40. The lens objective 40 one or more optical lenses 33 having a lens substrate 44 made of glass or plastics. The foremost optical element or lens 34 is provided on its outer surface facing the compartment 20 of the motor vehicle 50 with a self-cleaning and/or dirt repellent film 36.

The dirt repellent film 36 is preferably a photocatalytic film 48 made from a photocatalytic precursor. The thickness of the photocatalytic film 48 is preferably below 1 micron. The photocatalytic film 48 comprises a photocatalytic, preferable titanium dioxide, most preferable in the anatase phase. Between the lens substrate 44 and the photocatalytic film 48 a barrier layer 38 is preferably formed. The barrier layer 38 slows down or stops the diffusion or migration of alkali metal ions and/or alkali metal oxides into the photocatalytic film 48. Preferably, the barrier 38 is the product of the reaction between hydrogen glass for the lens substrate 44 and a photocatalyst precursor as defined above. In a preferred embodiment the barrier layer 38 is the reaction product between acid glass for lens substrate 44 and the photocatalyst precursor. Advantageously, the barrier layer 38 includes the elements silicon, titanium and oxygen. Most preferably, the barrier layer 38 comprises titanium, silicon and oxygen, and/or zirconium, silicon and oxygen.

All properties of the photocatalytic film 48 and/or the barrier layer 38 described above with respect to the optical element 34 preferably also apply to a corresponding photocatalytic film 48 and/or barrier layer 38 on a window 32 or a windscreen 54 of the motor vehicle.

## Claims

1. An optical imaging device (12) for a motor vehicle (10), which comprises at least one transparent optical element (34), **characterized in that** a surface of said optical element (34) is at least partially provided with a self-cleaning and/or dirt repellent film (36).

2. The optical imaging device (12) as claimed in claim 1, **characterized in that** said self-cleaning and/or dirt repellent film (36) comprises a photocatalyst.

3. The optical imaging device (12) as claimed in claim 2, **characterized in that** said photocatalyst comprises at least one crystalline oxide, particularly at least one crystalline oxide comprising titanium, tin, tungsten and/or molybdenum.

4. The optical imaging device (12) as claimed in claim 2 or 3, **characterized in that** said photocatalyst comprises titanium oxide, in particular titanium dioxide, preferable in the anatase and/or rutile phase.

5. The optical imaging device (12) as claimed in any one of the preceding claims, **characterized in that** an intermediate barrier layer (38) is provided between said optical element (33, 34) and said self-cleaning and/or dirt repellent film (36).

6. The optical imaging device (12) as claimed in any one of the preceding claims, **characterized in that** said self-cleaning and/or dirt repellent film (36) is provided on an outer surface of a foremost optical element (34) of said optical imaging device (12).

7. A vision system (30) for a motor vehicle, comprising at least one optical imaging device (12) as claimed in any one of the preceding claims, and a processing device (14) adapted to perform image processing of images captured by said optical imaging device (12).

8. The vision system as claimed in claim 7, **characterized in that** the optical imaging device (12), when mounted to a motor vehicle, is adapted to capture images from the surrounding of the motor vehicle.

9. The vision system as claimed in claim 7 or 8, **characterized in that** the optical imaging device (12), when mounted to a motor vehicle, is directed to view through a windshield (54) or a window (32) of the motor vehicle (10) .

10. The vision system as claimed in claim 9, **characterized in that** an inner surface of said windshield (54) or window (32) facing said imaging device (12) is at least partially provided with a self-cleaning and/or dirt repellent film (36).

11. The vision system as claimed in claim 7, **characterized in that** the optical imaging device (12), when mounted to a motor vehicle, is adapted to capture images of the driver, in particular the driver's face.

12. A window (32) or windscreen (54) for limiting a compartment (20, 22) of a motor vehicle (10), wherein the inner surface (58) of the window (32) or windscreen (54) facing the passenger compartment (22), when mounted to the motor vehicle (10), is at least partially provided with a self-cleaning of dirt repellent film (36).

13. The window (32) or windscreen (54) as claimed in claim 12, **characterized in that** the said self-cleaning and/or dirt repellent film (36) is designed as claimed in one or more of claims 2 to 5.

14. A method of manufacturing an optical imaging device (12), window (32) or windscreen (54) as claimed in one or more of the preceding claims, **characterized by** coating a surface of said optical element (34), window (32) or windscreen (54) at least partially with a photocatalytic layer from a vapor phase of from a photocatalytic precursor dissolved or dispersed in a liquid, in particular a long lived sol.

15. The method as claimed in claim 14, **characterized by** forming a barrier layer (38) as the product of a chemical reaction between hydrogen glass and the photocatalytic precursor.
